Europäisches Patentamt

European Patent Office

Office européen des brevets

(11) Veröffentlichungsnummer: **0 235 756 B1**

# EUROPÄISCHE PATENTSCHRIFT

(45) Veröffentlichungstag der Patentschrift: **14.10.92**

(51) Int. Cl.⁵: **G07C 9/00**, B60R 11/02, G08B 13/04

(21) Anmeldenummer: **87102763.7**

(22) Anmeldetag: **26.02.87**

(54) Schaltungsanordnung zur Identifikation des Eigentümers eines elektronsichen Gerätes, insbesondere eines Autoradios.

(30) Priorität: **01.03.86 DE 3606737**

(43) Veröffentlichungstag der Anmeldung:
**09.09.87 Patentblatt 87/37**

(45) Bekanntmachung des Hinweises auf die Patenterteilung:
**14.10.92 Patentblatt 92/42**

(84) Benannte Vertragsstaaten:
**AT ES FR GB IT**

(56) Entgegenhaltungen:
**EP-A- 0 145 405**
**DE-A- 3 031 527**
**DE-A- 3 509 562**

(73) Patentinhaber: **Blaupunkt-Werke GmbH
Robert-Bosch-Strasse 200
W-3200 Hildesheim(DE)**

(72) Erfinder: **Bochmann, Harald, Dr.-Ing.
Stöckener Strasse 125
W-3000 Hannover 21(DE)**

(74) Vertreter: **Eilers, Norbert, Dipl.-Phys.
Blaupunkt-Werke GmbH Robert-
Bosch-Strasse 200
W-3200 Hildesheim(DE)**

## Beschreibung

Die Erfindung betrifft eine Schaltungsanordnung nach der Gattung des Hauptanspruchs. Autoradios sind häufig Gegenstand von Diebstählen, insbesondere aus geparkten Kraftfahrzeugen. Eine elektronische Schaltungsanordnung die die Verwendbarkeit eines gestohlenen oder einfach aus einem Fahrzeug entfernten gesätes nur bei Eingohe eines geheimen Codewortes ermöglicht ist aus EP-A2-0 145 405 bekannt. Bei einer Sicherstellung entwendeter Autoradios ist es in den meisten Fällen sehr schwierig bzw. nicht möglich, anhand der Fabrikationsnummer den rechtmäßigen Eigentümer zu ermitteln. Zudem lassen sich die Fabrikationsnummern relativ leicht entfernen bzw. fälschen.

Der Erfindung liegt die Aufgabe zugrunde, ein Autoradio mit einer Anordnung zu versehen, die eine problemlose Identifizierung des Eigentümers ermöglicht.

Diese Aufgabe wird bei einer gattungsgemäßen Schaltungsanordnung durch die kennzeichnenden Merkmale des Anspruchs 1 gelöst.

Die mit der Erfindung erzielten Vorteile bestehen insbesondere darin, daß das elektronisch gespeicherte Kfz-Kennzeichen mittels der alphanumerischen Anzeigevorrichtung jederzeit durch Betätigen eines Aufrufschalters unverschlüsselt zur Anzeige gebracht werden kann. Anhand des angezeigten Kfz-Kennzeichens läßt sich der Eigentümer des Kraftfahrzeuges und damit des Autoradios schnell ermitteln.

Gemäß der Ausgestaltung der Schaltungsanordnung nach Anspruch 2 kann der Eigentümer anhand eines nur ihm bekannten geheimen Codewortes die Daten des zugehörigen Kfz-Kennzeichens einspeichern. Bei einer vorteilhaften weiteren Ausgestaltung der Schaltungsanordnung nach Anspruch 3 erfolgt unmittelbar nach der Eingabe eines falschen Codewortes die Anzeige des Kfz-Kennzeichens. Gemäß einer weiteren vorteilhaften Ausgestaltung der Schaltungsanordnung nach Anspruch 4 würde bei einer gewollt herbeigeführten Zerstörung der erfindungsgemäßen Schaltungsanordnung zwangsweise auch eine Zerstörung betriebsnotwendiger Teile des Autoradios erfolgen, so daß unbefugte Besitzer von einer derartigen Handlung absehen müßten.

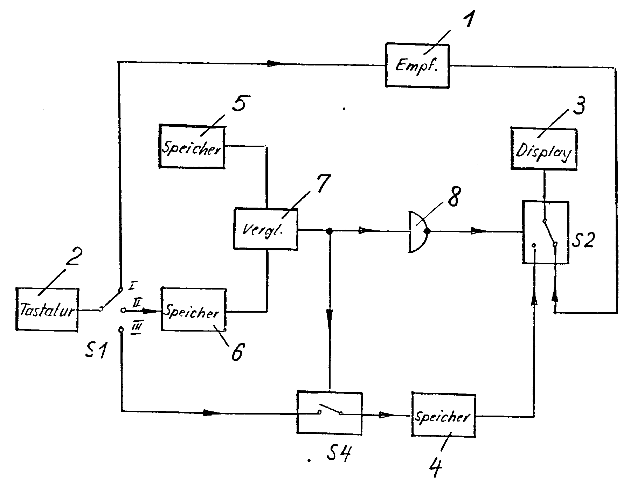

Ein Ausführungsbeispiel der Erfindung ist in der Zeichnung dargestellt und wird im folgenden näher beschrieben.

Der Empfangsteil 1 eines nicht dargestellten Autoradios ist einerseits über einen drei Schaltstellungen aufweisenden Umschalter S1 mit einer Tastatur 2 zur Eingabe alphanumerischer Zeichen und andererseits über einen als Umschalter ausgebildeten, elektronisch steuerbaren Aufrufschalter S2 mit einer alphanumerischen Anzeigevorrichtung 3 (Display) verbunden. Die Anzeigevorrichtung ist über den Umschalter S2 mit dem Ausgang eines nichtflächtigen ersten Speichers 4 verbindbar, in dem die Daten eines Kfz-Kennzeichens gespeichert sind. Der Eingang des ersten Speichers 4 ist über einen elektronischen Schalter S4 und über den Umschalter S1 in seiner dritten Schaltstellung mit der Tastatur 2 verbindbar. In einem nichtflüchtigen zweiten Speicher 5 ist ein geheimes Codewort gespeichert. Die Tastatur 2 ist ferner über den Umschalter S1 in seiner zweiten Schaltstellung mit dem Eingang eines dritten Speichers 6 verbindbar, so daß dieser Speicher 6 über die Tastatur 2 mit einem beliebigen Codewort belegbar ist. Die Ausgänge der beiden Speicher 5, 6 sind mit einer Vergleichseinrichtung 7 verbunden, die bei Übereinstimmung der Codeworte, also nach Eingabe des richtigen, nur dem Eigentümer des Autoradios bekannten Codewortes ein Schaltsignal abgibt, welches den elektrischen Schalter S4 derart steuert, daß er den Eingang des ersten Speichers 4 mit einem Kontakt des Umschalters S1 verbindet, der seiner dritten Schaltstellung zugeordnet ist. Nach einem anschließenden Umschalten des Umschalters S1 in seine dritte Schaltstellung läßt sich der erste Speicher 4 mit den Daten eines Kfz-Kennzeichens belegen. Der Ausgang der Vergleichseinrichtung 7 ist ein Nicht-Glied 8 mit dem Steuereingang des Aufrufschalters S2 verbunden.

Bei Nichtübereinstimmung der Codeworte eintsteht am Ausgang der Vergleichsstufe 7 ein Signal, welches einerseits den im Dateneingang des Speichers 1 angeordneten Schalter S4 sperrt und andererseits über das Nicht-Glied 8, den Aufrufschalter S2 derart steuert, daß er den Ausgang des Speichers 4 mit der Anzeigevorrichtung 3 verbindet, so daß diese das Kfz-Kennzeichen anzeigt.

Der Aufrufschalter S2 kann sowohl manuell als auch von der Steuerschaltung einer Diebstahlsicherung, welche nach einer zwischenzeitlich erfolgten Netztrennung eine elektrische Verreigelung der Gerätefunktionen bewirkt, betätigt werden.

Die Erfindung ist nicht nur auf die Verwendung bei Autoradios beschränkt, es können auch andere elektronische Geräte, die ebenfalls in Kraftfahrzeuge eingebaut sind, damit versehen werden.

## Patentansprüche

1. Schaltungsanordnung zur Identifikation des Eigentümers eines elektronischen Gerätes, insbesondere eines Autoradios, welches eine alphanumerische Anzeigevorrichtung sowie eine Tastatur zur Eingabe alphanumerischer Zeichen aufweist, wobei ein mit den Daten eines Kfz-Kennzeichens belegbarer, nichtflüchtiger erster Speicher (4) vorgesehen ist, dessen Ausgang über einen Aufrufschalter (S2) mit dem Eingang der alphanumerischen Anzeigevorrichtung (3) verbindbar ist.

2. Schaltungsanordnung nach Anspruch 1, wobei ein ein Codewort enthaltender, nichtflüchtiger, zweiter Speicher (5) und ein mittels der Eingabetastatur (2) mit einem Codewort belegbarer dritter Speicher (6) vorgesehen sind, daß eine mit diesen Speichern (5, 6) verbundene Vergleichseinrichtung (7) vorgesehen ist, die bei Übereinstimmung der Codeworte, also nach Eingabe des richtigen Codewortes, einen dem ersten Speicher (4) zugeordneten Schalter (S4) derart steuert, daß der erste Speicher (4) über die Eingabetastatur (2) mit den Daten eines Kfz-Kennzeichens belegbar ist.

3. Schaltungsanordnung nach Anspruch 2, wobei die Vergleichseinrichtung (7) bei Nichtübereinstimmung der Codeworte, also nach Eingabe eines falschen Codewortes, den der Anzeigevorrichtung (3) vorgeschalteten, mit dem Empfangsteil (1) des Autoradios und dem ersten Speicher (4) verbundenen, als Umschalter ausgebildeten Aufrufschalter (S2) derart steuert, daß anstelle der Abstimmdaten des Empfangsteils (1) das Kfz-Kennzeichen angezeigt wird.

4. Schaltungsanordnung nach einem der Ansprüche 1 bis 3, wobei
der Speicher (4) für die Daten des Kfz-Kennzeichens integraler Bestandteil der Ansteuerungselektronik der Anzeigevorrichtung (3) ist.

5. Schaltungsanordnung nach einem der Ansprüche 1, 2 oder 4, wobei
der Aufrufschalter (S2) durch eine Steuerschaltung, welche nach einer zwischenzeitlich erfolgten Trennung vom Bordnetz Funktionen des Autoradios verriegelt, gesteuert wird.

## Claims

1. Circuit arrangement for identifying the owner of an electronic device, in particular a car radio, which has an alphanumeric display device and a keyboard for inputting alphanumeric characters, a first non-volatile memory (4) which can be occupied by the data of a motor vehicle registration number being provided, it being possible to connect the output of said memory to the input of the alphanumeric display device (3) via a call-up switch (S2).

2. Circuit arrangement according to Claim 1, a second non-volatile memory (5) which contains a code word and a third memory (6) which can be occupied with a code word by means of the input keyboard (2) being provided, a comparison device (7) which is connected to these memories (5, 6) being provided, which comparison device controls, in the case of the code words matching, that is to say after the correct code word is input, a switch (S4) assigned to the first memory (4), in such a way that the first memory (4) can be occupied with the data of a motor vehicle registration number via the input keyboard (2).

3. Circuit arrangement according to Claim 2, the comparison device (7) controlling, in the case of non-matching of the code words, that is to say after a false code word is input, the call-up switch (S2) which is connected upstream of the display device (3), connected to the receiving component (1) of the car radio and to the first memory (4) and constructed as a change-over switch, in such a way that instead of the tuning data of the receiving component (1) the motor vehicle registration number is displayed.

4. Circuit arrangement according to one of Claims 1 to 3, the memory (4) for the data of the motor vehicle registration number being an integral component of the drive electronics of the display device (3).

5. Circuit arrangement according to one of Claims 1, 2 or 4, the call-up switch (S2) being controlled by a control circuit which inhibits the functions of the car radio after an intermediate disconnection from the vehicle electrical system.

## Revendications

1. Circuit pour l'identification du propriétaire d'un appareil électronique, en particulier d'un autoradio, qui comporte un dispositif d'affichage alphanumérique ainsi qu'un clavier pour l'introduction des signaux alphanumériques, dispositif de commutation dans lequel il est prévu une première mémoire (4) pouvant être garnie avec les données caractéristiques d'un véhicule à moteur, mémoire fixe, dont la sortie peut être reliée par l'intermédiaire d'un interrupteur d'appel (S2) à l'entrée du dispositif d'affichage alphanumérique (3).

2. Circuit selon la revendication 1, dans lequel sont prévus une deuxième mémoire (5) fixe, contenant un mot de code et une troisième mémoire (6) pouvant être garni d'un mot de code au moyen du clavier d'entrée (2), dans lequel il est prévu un dispositif de comparaison (7) relié à ces deux mémoires (5, 6), qui quand les mots de code coïncident, donc après l'entrée du mot de code juste, commande l'interrupteur (S4) associé à la première mémoire (4), de telle sorte que la première mémoire (4) peut recevoir au moyen du clavier d'entrée (2), les données des caractéristiques du véhicule à moteur.

3. Circuit selon la revendication 2, dans lequel le dispositif de comparaison (7) au cas où les mots de code ne coïncident pas, donc après l'entrée d'un mot de code erroné, commande le commutateur d'appel (S2) branché en avant du dispositif d'affichage (3), relié à la partie réceptrice (1) de l'autoradio et à la première mémoire (4), et constitué comme un inverseur, de telle façon que les caractéristiques du véhicule à moteur soient affichées à la place des données d'accord de la partie réceptrice (1).

4. Circuit selon l'une des revendications 1 à 3, dans lequel la mémoire (4) pour les données caractéristiques du véhicule à moteur, est une partie intégrante de l'électronique de commande du dispositif d'affichage (3).

5. Circuit selon l'une des revendications 1, 2 ou 4, dans lequel l'interrupteur d'appel (S2) est commandé par un circuit de commande, qui verrouille le fonctionnement de l'autoradio après une coupure intervenue entre-temps du réseau de bord.